# EUROPEAN PATENT APPLICATION

(11) **EP 3 415 865 A1**
(43) Date of publication of application: **19.12.2018**
(21) Application number: 17175550.7
(22) Date of filing: 12.06.2017
(51) Int. Cl.: G01B 21/22, G01D 5/347

(54) **DETECTOR CALIBRATION**

(71) Applicant: TOMRA Sorting NV, 3001 Leuven (BE)
(72) Inventor: Raeymaekers, Stefan, 3001 Leuven Belgium (BE)
(74) Representative: Tomkins & Co

(57) **Abstract**

A pattern for calibration of a detector, comprising of a series of contrasting light and dark segments; the segments being arranged such that the absolute position of any point on the pattern is determinable from a window portion of the pattern comprising the point; the window portion consisting of a predetermined minimum number of segments, the predetermined minimum number of segments being less than the total number of segments in the series.

## Description

### Field of the Invention

The present invention relates to detector calibration, in particular to calibration of cameras and line-scan cameras in multiple directions.

### Background to the Invention

The calibration of detectors and other optical equipment, such as cameras, is critical to ensure that images and other data captured by the detector is accurately recorded and interpreted. Mis-calibration can lead to misinterpretation of images and obtained data. Calibration of detector equipment is often a time consuming task, requiring multiple steps and frequently requiring multiple calibration or alignment targets against which the position and focus of a detector are assessed.

Sorting machines of different varieties require the use of detectors to produce images which are then analysed, for example, to determine whether items to be sorted should be rejected or allowed to continue in a process workflow.

In order to correctly direct rejected items based on the data from a detector (or other sensor), it is required to know, for each pixel, the exact position on the sorting belt or chute that the detector is looking at. Another reason to know the position of the pixels on the belt is to enable a geometric calibration for the detector.

In certain belt type sorting machines, a calibration ruler is placed on the sorting belt in the scanline of the detector. This ruler is provided with an alternating pattern of high and low intensity segments. This allows for performing some means of reject assignment and geometric calibration of the detector.

However such systems have a number of disadvantages. For example, when a scan line is divided over multiple detectors, the middle detector(s) look at a middle part of the ruler. To capture accurate positions on the belt, an operator typically has to count the first segment in view for each detector and set this as a parameter in software. Alternatively, a marker is put on the ruler to see a correspondence between a segment on the ruler and a segment in the view, after which the offset can be counted on the ruler. This can be a tedious and error prone procedure. US 5463429A describes a calibration pattern for a scan line camera. However, this patent only provides for alignment to the same single fixed position on the pattern. US 4557599A describes an alignment process but is limited in its applicability to matrix cameras. Luna et al in IEEE Transactions on Instrumentation and Measurement (Volume: 59, Issue: 8, Aug. 2010) describes calibration of line-scan cameras. However this work requires that a complete target should be visible in the camera.

It is therefore desirable to provide for more efficient detector calibration which improves on the above techniques.

### Summary of the Invention

The present invention provides a pattern for calibration of a detector, the pattern comprising a linear series of contrasting light and dark segments; the segments being arranged such that the absolute position of any point on the pattern is determinable by a detector from a window portion of the pattern wherein the window portion includes the point; the window portion comprising a predetermined number of segments, the predetermined minimum number of segments being less than the total number of segments in the series.

This is advantageous as it provides that a detector may determine an absolute position on the pattern by examination of a windowed portion of the pattern. The window portion is dimensioned to comprise a sufficient number of pattern segments such that a position within the complete pattern may be determined. This is particularly advantageous for the calibration of detectors, such as for example cameras, as it obviates the need, for example, of physical marking of rulers required in calibration techniques. It further obviates the need for multiple patterns for use with multiple detectors. It further provides for a geometric calibration of the detector and accounts for chromatic aberrations. The pattern in the window portion is thus unique and not repeated for the same window size over the entire pattern length.

The segments of the pattern may be rectangular shaped and comprise a length and a width. The width of at least one segment may be non-identical to the width of at least a second segment.
This is advantageous as the rectangular shaped segments are easily identifiable by a range of detector types. Furthermore, providing segments with non-identical widths provides for identifying a horizontal position within the pattern.

At least one segment of the pattern may be of non-uniform width along its length. This is advantageous as providing segments of non-uniform width along their lengths provides for identifying a vertical position within the pattern.

A detector calibration system may comprise a target having the pattern applied thereto. The detector calibration system may be arranged such that an absolute position and orientation of the target with respect to the detector is determinable when the window portion is viewed by the detector. Such a system provides the advantage of allowing for rapid calibration and confirmation of a detector position within the system.

The transition between at least one of the contrasting light and dark segments of the pattern as viewed by the detector may comprise a greyscale transition. The transition between at least one of the contrasting light and dark segments may comprise a sinusoidal greyscale transition. This is advantageous as it provides that sub pixel accuracy of a detector position with respect to the target may be determined.

The detector calibration system may be further arranged such that a focus of the detector with respect to the target is determinable from a standard deviation of a detected intensity of the light segments and dark segments of the pattern. This is advantageous as it provides for an initial or rough focus for the detector to be obtained.

The detector calibration system may be further arranged such that a focus of the detector with respect to the target is determinable from a comparison of the difference between a detected intensity of a light segment with a detected intensity of a dark segment. This is advantageous as it provides for a secondary or fine focus for the detector to be obtained.

The detector calibration system may comprise a line scan camera. The detector calibration may be arranged such that a vertical position and angle of the line scan camera with respect to the target is determinable from an angle between a scan line of the line scan camera and a centre line of the pattern. This is advantageous as it provides for alignment and calibration of a camera with respect to a target.

The present invention further provides a method of producing a pattern comprising a linear series of contrasting light and dark segments comprising arranging the series of contrasting light and dark segments to correspond to a generated binary output of a linear feedback shift register (LFSR) such that a 1 bit corresponds to a light segment and a 0 bit corresponds to a dark segment.

Such a method is advantageous as it provides for producing a physical pattern based on the binary output of the LFSR. In effect, the binary output is transformed into a series of light and dark segments which can be viewed by a detector.
The pattern may comprise a linear series of m segments wherein the binary output of the LFSR is generated by:
selecting a value n such that m <= 2^n-1+(n-1);
selecting a maximal-length LFSR of size n;
selecting a LFSR starting state;
creating a binary sequence of length m, starting from the selected LFSR starting state.
The pattern produced by this method may be used for calibration of a detector.

The method may further comprise applying a Manchester encoding to the binary output of the LFSR. This is advantageous as it provides that no more than two consecutive bits in the pattern will be the same. This provides sufficient edge density, i.e. sufficient transitions between contrasting light and dark segments, such that the absolute position on the pattern may be determined with improved accuracy compared to a non- Manchester encoded output.

The linear series of contrasting light and dark segments of the pattern may correspond to the binary output:
10101010100110100110010110011001101010100110010110011001010110011010101010 01010110011001011010010101100101010101010110101001011001011010010101010110 10011010010110011010010101010101100110100101100101011001101001100110011001 01010110010110010101100110011010100101011001011010100110011001101001010110 01011001101001010110100101101001100110100110100110010110100101010110011010 01101010100101101001010110011010011010010101100110101001101010010110101001 01011010011010100110011010010101101010101001101010011001011010100101011001 10100101010110101010011010101001100101011010101001011010100110010101010101 10101010010110010101011001101001010110011001010101011010101010010110011010 10101001101010100101100110011001010101011001011001100101101010011001011010 01100110010101010101100101101010101010010101010110010110100101100110011010 01101001011001010101101001
such that a 1 bit corresponds to a light segment and a 0 bit corresponds to a dark segment.

The window portion of the pattern may consist of 13 bits. This provides an effective minimum window size to allow an absolute position on the pattern to be determined.

### Description of the Drawings

**Figure 1** is a representation of a linear feedback shift register with size 4 bits, with a mask 0011
**Figure 2** is a representation of a maximum length linear feedback shift register with size 4 bits
**Figure 3** is a representation of a sample sequence generated from a linear feedback shift register, with a mask 1001
**Figure 4** is a binary representation of a pattern according to the invention
**Figure 5** is a binary representation of a Manchester encoded pattern according to the invention
**Figure 6** is a pattern according to the invention
**Figure 7** is a representation of a segment of the pattern according to the invention
**Figure 8** is a representation of a segment of the pattern according to the invention
**Figure 9** is a representation of a pattern of non-uniform segment width according to the invention
**Figure 10** is a representation of sub-pixel fitting
**Figure 11** is a representation of sub-pixel fitting

### Detailed Description of the Drawings

The present invention will now be described with reference to the accompanying drawings. A pattern for detector calibration comprises a linear series of contrasting light and dark segments; the segments being arranged such that the absolute position of any point on the pattern is determinable from a window portion of the pattern wherein the window portion includes the point; the window portion comprising a predetermined number of segments, the predetermined minimum number of segments being less than the total number of segments in the series.

The series of contrasting light and dark segments of the pattern are arranged to correspond to a binary output of a linear feedback shift register (LFSR). As such, a method of producing a pattern is provided comprising a linear series of contrasting light and dark segments comprising arranging the series of contrasting light and dark to correspond to a generated binary output of a linear feedback shift register (LFSR) such that a 1 bit corresponds to a light segment and a 0 bit corresponds to a dark segment. The pattern produced by this method may be used for calibration of a detector. In a further embodiment, a 1 bit may correspond to a dark segment and a 0 bit may corresponds to a light segment

### Feedback Function

A linear feedback function as used to derive the pattern is defined by a set of taps that feed into a xor-gate network. The taps can be expressed as a mask. For example, if there are taps on the first, third and fourth bit, the mask is 1101 (note that the first bit is at the right).
The result of a feedback function defined by a given mask for a certain input sequence is either 0 or 1 depending on whether the number of ones in the masked input sequence is even or odd.

### Example:

| | | | | |
|---|---|---|---|---|
| Input | 0 | 1 | 1 | 0 |
| Mask | 1 | 1 | 0 | 1 |
| Masked Input | 0 | 1 | | 0 |

Count of ones: 1 is odd → 1

| | | | | |
|---|---|---|---|---|
| Input | 1 | 1 | 0 | 0 |
| Mask | 1 | 1 | 0 | 1 |
| Masked Input | 1 | 1 | | 0 |

Count of ones: 2 is even → 0

The mask can be represented as a binary number. However for large masks it is easier to convert this to a deximal or a hexadecimal number. The above mask is therefore Ob1101 or 13 or 0xD.

### Linear Feedback Shift Register

A linear feedback shift register (LFSR) is defined by the size of its state (in bits) and a linear feedback function that returns 1 bit. The linear feedback shift register is implemented such that starting from a specific value in the register, a new register value is calculated by shifting the value by one bit and subsequently appending this value to the original value. While shifting, bits that fall outside the bit window are discarded.

### Example:

Given a value 1101, the feedback function with mask 0011 will return 1, which is appended to the shifted value.

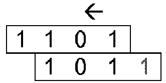

Therefore the new value becomes 1011.

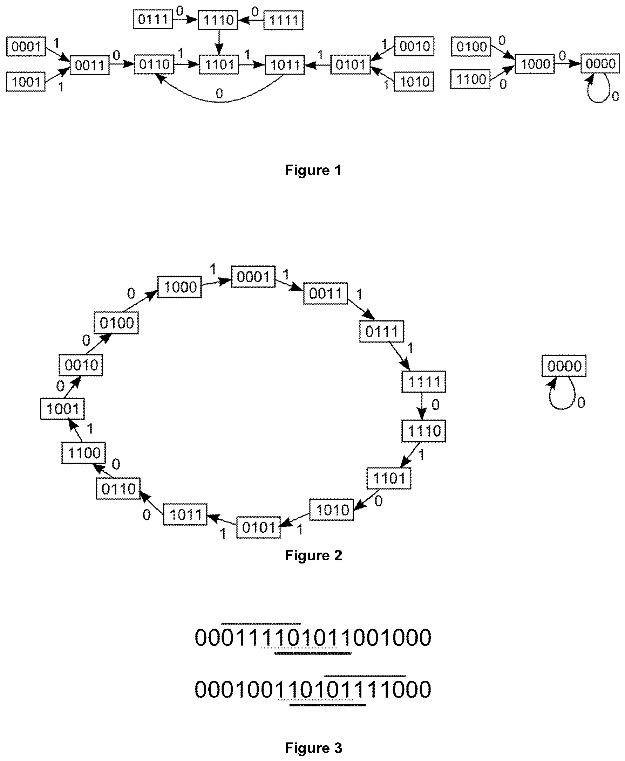

**Figure 1** illustrates an example of the state space of a LFSR with a size of 4 bits wherein the feedback function comprises XOR-ing of the first and the second bit. For each value in Figure 1, an arrow indicates the value that will be the next value using a LFSR with mask 0011.

The LFSR of the present invention may utilize as a feedback function the XOR-ing of the bits at a subset of the bit positions. These types of LFSRs are called Fibonacci LFSRs. A number of the LFSRs with a given bit size n are called maximum-length LFSR. Such LFSRs have a loop containing 2^n-1 states (this is all possible states except the state with all zeroes). **Figure 2** illustrates a maximum-length LFSR with a state size of 4 bits with a mask 1001 or 0x9. The number of values in the cycle is 15. For LFSR of length 2 there is only one mask resulting in a maximal length LFSR: 0x3, the same can be said for an LFSR of length 3: 0x6. For LFSR of length 4, two maximal LFSR exist, with masks 0x9 and 0xC. For LFSR of length 5, there exists 6 maximal LFSR with masks 0x12, 0x14, 0x17, 0x1B, 0x1D, 0x1E.

### Pattern Generation and Absolute Positioning

To generate a pattern according to the invention, the results from the feedback function are represented as a series of contrasting light and dark segments. For example, using the 4-bit LFSR with as mask 1001 as shown above:
Starting with 0001, the result is 1, hence the pattern starts as 1.
The next state becomes 0011 with as result 1, hence the pattern becomes 11.
The next state becomes 0111 with as result 1, hence the pattern becomes 111.
The next state becomes 1111 with as result 0, hence the pattern becomes 1110.

Thus, the pattern 1110 may be represented as 3 light segments to represent the three 1's and a dark segment to represent the 0.

As each state of n bits of an LFSR overlaps with its predecessor (they have n-1 bits in common), the states may be chained in a long sequence of bits. This sequence is the concatentation of all the generated bits. For the example maximum-length LFSR as outlined above with a mask 1001 and start state 0001, the following sequence is produced: 000111101011001000. A sequence of length 2^n-1+(n-1) may be created wherein the last n-1 bits contain a wrap around of the first n-1 bits. Note a sequence can start at any given state, hence 2^n-1 different sequences can be generated.

The construction of this sequence is such that each subsequence of 4 bits in the sequence is unique. A mapping can be created from a subsequence onto a position, by assigning an index position to each state in the loop. Table 1 below provides a look up table for the present example sequence 000111101011001000. Each subsequence (ii) of 4 bits is interpreted as a binary number and the resulting number is used as an index (i) in the table. The additional value (iii) in the table for that index, is the position in the sequence of that subsequence.

**Table 1**

| **i** | **ii** | **iii** |
|---|---|---|
| 0 | 0000 | -1 |
| 1 | 0001 | 0 |
| 2 | 0010 | 12 |
| 3 | 0011 | 1 |
| 4 | 0100 | 13 |
| 5 | 0101 | 7 |
| 6 | 0110 | 9 |
| 7 | 0111 | 2 |
| 8 | 1000 | 14 |
| 9 | 1001 | 11 |
| 10 | 1010 | 6 |
| 11 | 1011 | 8 |
| 12 | 1100 | 10 |
| 13 | 1101 | 5 |
| 14 | 1110 | 4 |
| 15 | 1111 | 3 |

Thus, for a pattern comprising a linear series of m segments, the sequence may be generated by:
▪ selecting a value n such that m <= 2^n-1+(n-1);
▪ selecting a maximal-length LFSR of size n;
▪ selecting a LFSR starting state;
▪ creating a binary sequence of length m, starting from the selected LFSR starting state.

### Horizontal Positioning and Direction

A selected number of bits in a given sequence may be termed a window. For a given sequence, there will a number of windows which when read as a series of bits from left to right will find a corresponding "mirrored" series of bits in the sequence when read from right to left. For example, with respect to Figure 3, the line running across the top of the above representation indicates a 6 bit window read from left to right as 011110. The line running across the top of the below representation indicates a 6 bit window read from right to left also as 011110. Thus, in this instance, it may not be possible for a detector, for example a camera, to tell which direction it is pointing with respect to a pattern defined by this sequence, as the camera pointing at the pattern from the left may read the sequence 011110 as highlighted in the above representation of Figure 3, while a camera pointing at the pattern from the right may read the sequence 011110 as highlighted in the below representation of Figure 3.

For the example above, if a window of size 6 is selected, it is found that the sequence contains only three positions were the window contains a subsequence that occurs also as a "mirrored" sequence (See Figure 3, wherein the sequences read left to right in the top representation correspond to the sequences read right to left in the bottom representation). Increasing the window size helps to reduce the instances in which "mirrored" series of bits occurs. For the example sequence of Figure 3, Table 2 indicates the number of instances where a "mirrored" sequence will be found with respect to a given window size. Thus, a window size of 8 allows for the direction of view of a detector to be determined as there is no corresponding mirrored sequence.

**Table 2**

| **Window size (bits)** | **Instances of "mirrored" sequences** |
|---|---|
| 4 | 15 |
| 5 | 6 |
| 6 | 3 |
| 7 | 1 |
| 8 | 0 |

As such, in order to generate a pattern that provides for finding the absolute position in a sequence of m positions, it must be possible to determine from which direction the pattern is being viewed from a given windowed view of the pattern.

To generate such a pattern, for a given n, all the possible maximal-length feedback functions and all the possible sequence starting states are considered. For each pattern thus generated, the minimal window size needed to distinguish the direction of view is determined. The pattern with the smallest window size is then determined.

For a given m, bit sizes may be chosen for the LFSR that are larger than the first n for which the equation m ≤ 2ⁿ-1+n-1 will hold. This implies that the lookup table for the position of a subsequence in a given sequence will become larger, however a smaller window for determining direction may result.

### Manchester encoding

The patterns generated as described in the previous section may have long stretches of 0's or 1's. This may be overcome by applying Manchester encoding to the patterns. While this doubles the amount of bits in the pattern, it guarantees that no more than two consecutive bits will be the same. This provides sufficient edge density, i.e. sufficient transitions between contrasting light and dark segments, such that the absolute position on the pattern may be determined with improved accuracy compared to a non- Manchester encoded output. For example, the Manchester encoding for the example sequence 000111101011001000 is: 101010010101011001100101101001101010. Note that the sequences of multiple 1's and 0's from the initial sequence have been broken up.

### Calibration system

An embodiment of a detector calibration system comprising a pattern as described above is described. Further arrangements of patterns and detectors other that those described below are possible.

A detector calibration system may comprise a target having a pattern as described above applied thereto. The target, for example, may be a ruler and the pattern may be applied along the length of the ruler. The detector calibration system may be arranged such that an absolute position and orientation of the target with respect to the detector is determinable when the window portion of the pattern on the ruler is viewed by the detector.

The detector may be in use with, for example, a sorting machine. The ruler may extend across a conveyor of the sorting machine. In order to be suitable for use with sorting machines of typical dimensions, the width of the dark and light segments of the pattern cannot be too small. A pattern having a segment width of 2.5 mm is found to be suitable. The detector may be one or more cameras, for example line scan cameras.

A camera scan line of 2000 mm is considered suitable for a range of detection procedures. To accommodate a scan line of 2000mm the ruler comprising the pattern may be made slightly wider on its sides (e.g. 50mm each side), resulting in an overall pattern width of 2100 mm. Using a segment width of 2.5mm, this results in a pattern of 840 segments, which corresponds to an LFSR sequence (without Manchester encoding) of 420 bits.

Thus a search is performed for a minimal window size for determining both absolute position and orientation for a pattern of length 420. Table 3 shows the results for different sizes for the LFSR:

**Table 3**

| **Size LFSR (n)** | **Size window (w)** | **Size lookup table** | **Size window in mm (Manchester encoded)** |
|---|---|---|---|
| 9 | 16 | 512 | 80 |
| 10 | 15 | 1024 | 75 |
| 11 | 13 | 2048 | 65 |
| 12 | 13 | 4096 | 65 |

With reference to Table 3, the LFSR size n is indicated in the first column. The window size w is indicated in the second column. For use with a Manchester encoding, this window size should be multiplied by a factor of 2.

A pattern segment width of 2.5 mm is selected. This provides for effective high resolution performance, i.e, allowing for camera implementations that look very close at the pattern and for effective low resolution performance, i.e, allowing for cameras that look from further away at the pattern.

The fourth column indicates a physical size of the minimal window width to detect the position unambiguously. For example, with respect to the first row of values in Table 3, the window width is thus derived from w*2*2.5 (e.g. 16*2*2.5 = 80).

A minimal window size of 13 is thus determined. The sequence with the smaller look up table of 2048 is selected. This provides 196 patterns with a minimal window. It is preferable to ensure that the first and last bit of the selected pattern is a 1. This provides a symmetric ending at the two ends of the sequence and simplifies the processing of views at the edges of the ruler. As such, a pattern is selected that has a Manchester encoding starting and ending with a 1). The parameters are:
- Mask for the taps: 0x503 (1283) - Hexadecimal (Decimal)
- Start state: 0x25 (37) - Hexadecimal (Decimal)

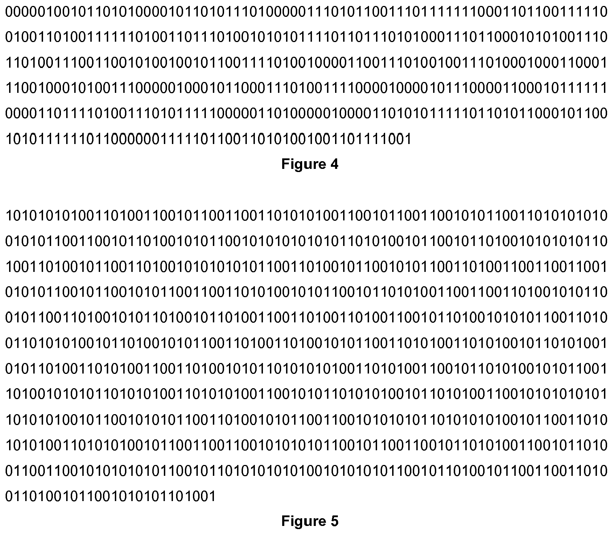

The complete pattern produced (420 bits) is shown in Figure 4. The corresponding Manchester encoded pattern (840 bits) is shown in Figure 5.

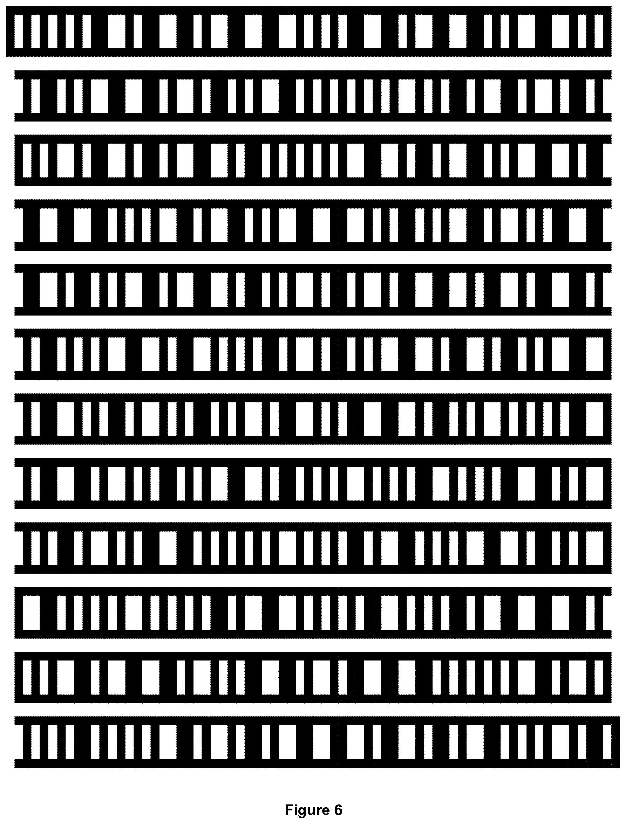

Figure 6 displays the whole 2100 mm pattern in 1:1 scale (cut in pieces of 17,5 cm).

### Vertical positioning

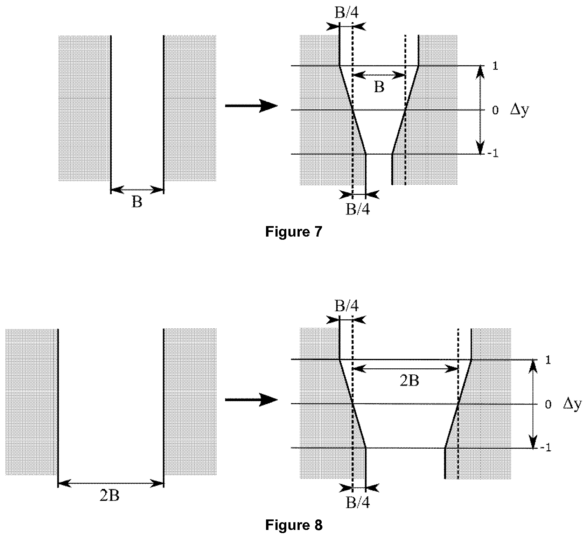

The segments according to the pattern of the invention may be rectangular shaped and comprise a length and a width. Furthermore, the width of a least one segment may be of non-identical to the width of at least a second segment. Furthermore, at least one segment may be non-uniform width along its length. Such features allow vertical positioning in the pattern to be determined (See Figure 7 and 8).

With reference to Figure 7, a region below a centre line and above the centre line of the pattern of the invention is shown wherein the height of the region is defined by Δy in [-1, 1]. The vertical position is defined as on the centre line for Δy = 0, as Δy=1 for the top of the region and as Δy= -1 for the bottom of the region below the centre line.

Given a light segment (i.e corresponding to a sequence bit value of 1) of thickness B, the thickness may change linearly according to Δy within the region from a thickness of B -B/2 to a thickness of B +B/2.

With reference to Figure 8, given a double light segment (i.e corresponding to a sequence bit value of 1 followed by an additional one) of thickness 2B, the thickness may change linearly according to Δy within the region from 2B -B/2 to 2B +B/2.

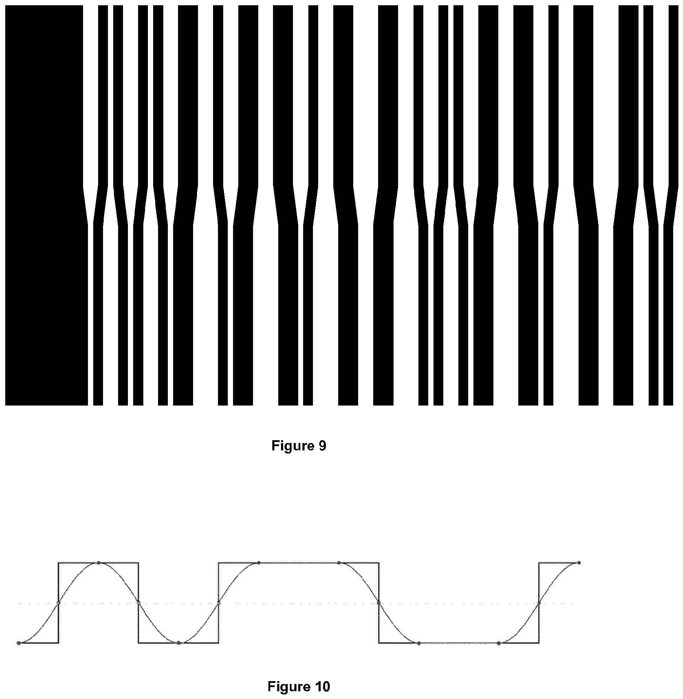

Pattern segments may be termed as either "odd" or "even" depending on their shape. For example, with reference to Figure 9, the difference between "odd" and "even" white segments can be seen. The first (odd) white line starts thick at the top of and tapers down to thin at the bottom. The second (even) white line starts thin at the top of the figure and ends thick at the bottom. The "odd" characteristic is further shown in Figures 7 and 8. The thickness of the middle part is B in Figure 7 (or 2B in Figure 8) plus Δy B/2. For the "even" lines the behavior is "swapped": the line is thin on top and thick at the bottom. In the formula for the thickness, the sign is thus swapped from plus to minus. As such, the thickness of the odd segments (single) equals B + Δy B/2, while for the even segments it equals B - Δy B/2. This implies that the thickness of the dark segments remains unchanged. However their position shifts depending on Δy.

Thus, for a segment of base width B, if the width of an odd white line is W = B + Δy B/2, then the height may be calculated as Δy = 2 W/B - 2. Furthermore, the width of even white lines is W = B - Δy B/2 and the height may be calculated from Δy = 2 - 2 W/B. Note that there are also white lines that have as base thickness 2B.

As such, if we a assume that in a detector calibration system, a detector, for example a camera, should be focused on the centre line, a calculation of Δy either above or the center line may indicate a mis-alignment from centre and thus provides for the detector to be recalibrated to the centre line accordingly.

In operation, a camera may be set to look at the pattern, but it may not be necessarily be looking parallel to the centre line of the pattern. For example, a line scan camera has a single line of pixels that image across an object. As such, when using a line scan camera, the scan line of the camera may not be parallel with a physical centre line of the pattern. Therefore as viewed with the camera, a given pixel height position, for example in two different white segments, may appear at a different heights with respect to the scan line of the camera. A pixel height for each white segment of the pattern may be calculated. In order to calculate a given pixel height, a linear line may be fitted through discrete points over a number of white segments. The more white segments, the more accurate the fitting will be, hence another advantage of using Manchester encoding for the pattern. Thus, the height (y-position) for a certain x-position can be determined by evaluating the line at that position. This also provides that the angle between a centre line of the pattern and the scan line of the camera may be calculated. As such, the scan line of a camera may be defined by two values: the angle and a height at a specific position. When a camera is installed and aligned within a detector calibration system, it is desired to have both the angle and height set to zero. It may also be desirable to set different heights for different cameras if, for example, two cameras need to look at different parallel lines. Figure 9 shows a section of the pattern of the invention which may be utilized for camera alignment in the above described manner. In a particular embodiment, a curved scan line rather than a linear scan line as described may be in use. In this set up, a curve fitting may be performed on a number of discrete points to provide camera position information. Thus, utilizing multiple discrete points, rather than a single point, allows camera positioning to be determined for both linear and curved scan lines.

### Sub-pixel fitting

In the patterns described in the previous sections, the position on the pattern is determined by the edge locations of the light and dark segments, in effect the position data is encoded in the edges between dark and light segments. When viewed through a camera or other digital optical device, this allow for position detection down to a pixel level. However, the pixels within the dark areas and the pixels within the light areas of the pattern themselves are not used to determine a position within the pattern. In order to detect a segment edge at a resolution finer than pixel level, the gray value of the pixel (2 pixels) at the edge may be examined. However, typically this approach is prone to noise. An alternative is to define a gray level pattern around the edge. This provides for use of multiple pixels in order to define the position of a local edge in subpixel precision.

However, not every gray-level pattern is suitable, e.g, a linear gradient from dark to light will add less information. Below, an approach based on a sinusoid is described. With reference to Figure 10, the edge between high and low is replaced by a sinusoidal shape that changes from light to dark (or the other way around) over the thickness of a segment (B). Half of B before the edge and half of B after the edge of the segment.

With further reference to Figure 10, the straight vertical and horizontal lines represent the gray values of an original pattern image. The curved lines are the gray values of the new image Note that the middle of the segments that are 2 bits wide are either completely light or completely dark (see straight lines in Figure 10).

The image may be thresholded in the middle of the light and dark values (see dashed line) and the binarized image will have its edges at the same position as the original image. This will still result in edges at pixel positions. However, in a further step a line may be fitted through the values of the pixels around the detected edge-pixel. The intersection of this line with the threshold line will result in a sub-pixel position for the edge.

For low resolutions this is a good approach. The total accuracy increases also because the position is averaged over all edges in the image. For high resolutions (for example where a detector is positioned closer to a pattern) there are less edges over which to average i.e. as the camera is viewing less pattern segments. However, at high resolutions the sinusoidal shape is clearer and a more accurate edge detection can be made by fitting a sinusoid instead of a line.

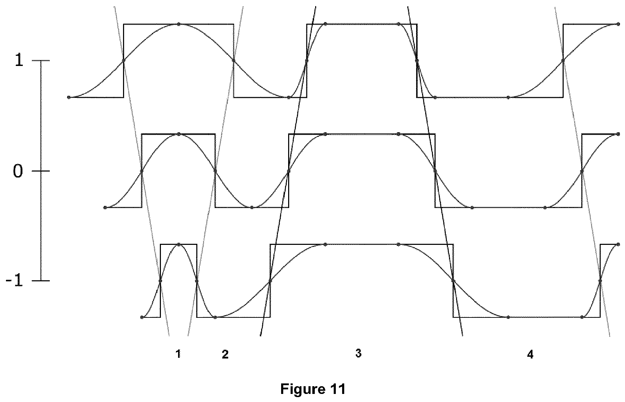

For the vertical positioning the thickness or width of a pattern segment changes along its height. This implies that the edge transitions between light and dark segments shift with the changes in width. When the edges shift, the threshold line and the sinusoidal shape should still intersect at this edge. Therefore the sinusoid is also stretched linearly depending on the height. This is shown in Figure 11. The middle part (demoted "0" on the vertical) is at the centre line (no shifts), the top (Denoted "1" on the vertical) and bottom (denoted "-1") parts are at the extrema of the vertical alignment strip (maximal shifts). Light segments are denoted by 1 and 3 while dark segments are denoted by 2 and 4.

The vertical lines indicate the linear shifting of the edges. For example, the first two vertical lines indicated a narrowing of a light segment (1), while the second and third vertical line indicate a shift in the edge position of a dark segment (2). As such, it can be seen that the centres of the light segments stay on the same position while the segment narrows or broadens while the dark segments stay the same width, but the centre changes position.

### Optimizing detector focus

The focus of a detector in a detector calibration system may be optimized by provided firstly a rough focus indication and a subsequent finer focus indication.

A rough indication of a detectors focus on a pattern of segments may be achieved by analysing the standard deviation of the gray values in an image or frame grab obtained from the detector. For example, if the detector is out of focus the image will be a uniform gray. An intermediate indication of focus may be obtained from the difference in height (difference between maximum and minimum gray level) between segments of one bit width and two bit width. As such, the better the focus of the detector, the higher the calculated standard deviation. When the detector focus is sufficiently good to detect the pattern, a subsequent finer focus indication may be utilized.

A first embodiment of a finer focus indication utilizes the presence of thin and thick white segments in the pattern. For a thin segment (using the sinusoidal transitions as described above) only one pixel will be at the highest intensity value. For the thick white segments there may be a whole plateau of pixels having the same high intensity. If the camera is out of focus the intensity values will be smoothed out and the top values and bottom values of the thin segments will come closer together. The ratio between the difference between top and bottom intensity values of the thin segments versus the difference of the top and bottom intensity values for the thick segments provides an indication of the quality of the detector focus. The closer the ratio value to 1, the better the focus.

A second embodiment of a finer focus indication utilizes examining the segment edges without a sinusoidal transition. For example, every ninth segment edge may be a high contrast edge. Given that a bad focus will blur out this transition over multiple pixels, the highest difference between two adjacent pixels is measured around the segment edges without a sinusoidal transition. The higher the difference value the better the focus, i.e. indicating a strong transition from a white to black segment over two adjacent pixels. The fine focus measurements may be averaged out over all edges in order to get a stable indication. This provides the advantage that due to the high edge density (i.e multiple segments), the focus may be measured and optimized over a whole scan line and not only at specific points.

The words "comprises/comprising" and the words "having/including" when used herein with reference to the present invention are used to specify the presence of stated features, integers, steps or components but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable subcombination.

## Claims

1. A pattern for calibration of a detector, the pattern comprising a linear series of contrasting light and dark segments;
the segments being arranged such that the absolute position of any point on the pattern is determinable by a detector from a window portion of the pattern wherein the window portion includes the point; the window portion comprising a predetermined number of segments, the predetermined minimum number of segments being less than the total number of segments in the series.

2. The pattern of claim 1 wherein the segments are rectangular shaped and comprising a length and a width.

3. The pattern of claim 1 or 2 wherein the width of a least one segment is non-identical to the width of at least a second segment.

4. The pattern of claim 3 wherein at least one segment is of non-uniform width along its length.

5. A detector calibration system comprising:
a target having the pattern of any preceding claim applied thereto.

6. A detector calibration system according to claim 5; the system arranged such that an absolute position and orientation of the target with respect to the detector is determinable when the window portion is viewed by the detector.

7. A detector calibration system according to claim 6, wherein a transition between at least one of the contrasting light and dark segments of the pattern as viewed by the detector comprises a greyscale transition.

8. A detector calibration system according to claim 7 wherein a transition between at least one of the contrasting light and dark segments is a sinusoidal greyscale transition.

9. A detector calibration system according to claim 6; the system further arranged such that a focus of the detector with respect to the target is determinable from a standard deviation of a detected intensity of the light segments and dark segments of the pattern.

10. A detector calibration system according to claim 8; the system further arranged such that a focus of the detector with respect to the target is determinable from a comparison of the difference between a detected intensity of a light segment with a detected intensity of a dark segment.

11. A detector calibration system according to claim 5 wherein the detector comprises a line scan camera.

12. A detector calibration system according to claim 11 arranged such that a vertical position and angle of the line scan camera with respect to the target is determinable from an angle between a scan line of the line scan camera and a centre line of the pattern.

13. A method of producing a pattern comprising a linear series of contrasting light and dark segments, the method comprising arranging the series of contrasting light and dark segments to correspond to a generated binary output of a linear feedback shift register (LFSR) such that a 1 bit corresponds to a light segment and a 0 bit corresponds to a dark segment.

14. The method according to claim 13; wherein the pattern comprises a linear series of m segments and wherein the binary output of the LFSR is generated by:
selecting a value n such that m <= 2^n-1+n-1;
selecting a maximal-length LFSR of size n;
selecting a LFSR starting state;
creating a binary sequence of length m, starting from the selected LFSR starting state.

15. The method of claim 14 further comprising applying a Manchester encoding to the binary output of the LFSR.

16. The pattern of claim 1 wherein the linear series of contrasting light and dark segments corresponds to the binary output
10101010100110100110010110011001101010100110010110011001010110011010 10101001010110011001011010010101100101010101010110101001011001011010 01010101011010011010010110011010010101010101100110100101100101011001 10100110011001100101010110010110010101100110011010100101011001011010 10011001100110100101011001011001101001010110100101101001100110100110 10011001011010010101011001101001101010100101101001010110011010011010 01010110011010100110101001011010100101011010011010100110011010010101 10101010100110101001100101101010010101100110100101010110101010011010 10100110010101101010100101101010011001010101010110101010010110010101 01100110100101011001100101010101101010101001011001101010101001101010 10010110011001100101010101100101100110010110101001100101101001100110 01010101010110010110101010101001010101011001011010010110011001101001 101001011001010101101001
such that a 1 bit corresponds to a light segment and a 0 bit corresponds to a dark segment.

17. The pattern of claim 16 wherein the window portion consists of 13 bits.
